# EUROPEAN PATENT SPECIFICATION

(11) **EP 2 748 240 B1**
(45) Date of publication and mention of the grant of the patent: **06.04.2016**
(21) Application number: 12759001.6
(22) Date of filing: 21.08.2012
(51) Int. Cl.: C08J 9/12, C08J 9/20, C08L 25/08, C08K 3/34

(54) **WATER EXPANDABLE POLYMER BEADS**
WASSERSCHÄUMBARE POLYMERKÜGELCHEN
BILLES DE POLYMÈRE EXPANSIBLES À L'AIDE D'EAU

(30) Priority: 26.08.2011 EP 11006977
(43) Date of publication of application: 02.07.2014
(73) Proprietor: Saudi Basic Industries Corporation, Riyadh 11422 (SA)
(72) Inventor: GHAMDI, Ghurmallah, 11422 Riyadh - Saudi Arabia (SA); HAMDAN, Mohammed, 11422 Riyadh - Saudi Arabia (SA); JANSEN, Martinus Adrianus Gertrudus, NL-5600 HG Eindhoven (NL); NELISSEN, Laurentius Nicolaas Ida Hubertus, NL-5600 HG Eindhoven (NL)
(74) Representative: Sabic Intellectual Property Group
(86) International application number: PCT/EP2012/003537
(87) International publication number: WO 2013/029757

(56) References cited:
- WO-A2-2007/030719
- CA-A- 844 652
- US-A- 6 160 027
- SHEN J ET AL: "Synthesis and foaming of water expandable polystyrene-clay nanocomposites", POLYMER, ELSEVIER SCIENCE PUBLISHERS B.V, GB, vol. 47, no. 18, 23 August 2006 (2006-08-23), pages 6303-6310, XP028060646, ISSN: 0032-3861, DOI: 10.1016/J.POLYMER.2006.06.068 [retrieved on 2006-08-23] cited in the application

## Description

The present invention relates to a process for the preparation of a water expandable polymer beads (WEPS).

Commercially available expandable polystyrene beads (EPS) generally use pentane as the blowing agent. The application of pentane and its isomers results in homogeneous EPS foams of low density. However, one main disadvantage of using pentane or its isomers is the harmfulness to the environment. Research showed that both pentane and its isomers contribute to ozone formation in the lower atmosphere. Also carbon dioxide, which contributes to the greenhouse effect, is being formed during the photo-oxidation of pentane.

A dissertation of the University of Eindhoven "Water Expandable Polystyrene" by J. J. Crevecoeur dating from 1997 describes a process for the production of WEPS, in which water, finely distributed in styrene, is first of all emulsified by means of surface-active substances, after which the styrene is polymerized up to a conversion of 50%, the mixture is suspended in water with phase inversion and the styrene is finally polymerized to completion by means of peroxide initiators. The surface-active substances used are amphiphilic emulsifiers, e.g. sodium bis(2-ethylhexyl)sulfosuccinate or sodium styrenesulfonate or block copolymers comprising polystyrene blocks and poly(styrene sulfonate) blocks. All of these substances exhibit both a hydrophilic and a hydrophobicmoiety and are thus capable of emulsifying water in styrene.

US6160027 describes the preparation of beads consisting of polystyrene homopolymer. An additional emulsifier (preferably sodium bis(2-ethylhexyl)sulfosuccinate: AOT) is used in the prepolymerization step to emulsify the water droplets in the polystyrene/styrene prepolymer mixture. The problem of using emulsifiers with long linear alkyl chains is that the miscibility of these aliphatic emulsifier tails with the aromatic styrene/polystyrene phase decreases with increasing conversion of the styrene/polystyrene mixture. At a certain degree of conversion showing a certain high viscosity, surfactant rich domains are formed which will subsequently negatively affect water droplet size and shape. As a consequence, coalescence of dispersed water droplets will eventually occur. The eventual result is a phase separation between the water phase and the styrene/polystyrene phase. Furthermore, emulsifiers such as AOT may have negative influence on the suspension stability. The styrene/polystyrene viscous droplets containing emulsified water may consequently change in shape and size to result in non-spherical beads. In a specific case, the present suspension water that is used as medium to disperse the styrene/polystyrene droplets may become fully emulsified as small water droplets in a continuous styrene/polystyrene phase (inverse emulsion).

Polymer, 2006, 47, 6303-6310 and WO2007/030719 describe a method similar to the method developed by Crevecoeur et al. to prepare WEPS beads. However, sodium montmorillonite nanoclay was added to the emulsified water as a water absorber/carrier. For these reactions, an emulsifier bis(2-ethylhexyl) sulfosuccinate sodium salt was used as emulsifier. An improved water uptake and reduced water loss during storage due to the presence of montmorillonite nanoclay is described. WEPS foams with a density of less than 50 kg/m³ were obtained. According to these publications, the Montmorillonite nanoclay forms a layer around the cell wall during foaming of the WEPS beads. This layer reduces free diffusion of water out of the bead during the foaming procedure so that more water is available for expansion and hence larger expansion ratios are obtained. Emulsifiers such as AOT may have a negative influence on the suspension stability.

There is a need in the industry for a novel process for the preparation of water expandable polymer beads.

It is an object of the present invention to provide a novel process for the preparation of a water expandable polymer beads in which the above and/or other problems are reduced.

According to the present invention, there is provided a process for the emulsifier-free preparation of water expandable polymer beads, which process comprises the steps of:
a) providing an emulsifier-free monomer composition comprising styrene and a polar comonomer containing a carbon-to-carbon double bond,
b) prepolymerizing the monomer composition to obtain a prepolymer composition comprising styrene, the polar comonomer and their copolymer,
c) adding an aqueous dispersion of a modifier-free nanoclay to the prepolymer composition to obtain an inverse emulsion,
d) suspending the inverse emulsion obtained by step c) in an aqueous medium to yield an aqueous suspension of suspended droplets and
e) polymerizing the monomers in the droplets of the suspension obtained by step d).CL1

It was surprisingly found that the combination of the polar comonomer and the nanoclay allows a very stable suspension polymerization system which results in polymer beads having a good expandability.

Known emulsifiers used for the preparation of water-expandable polymer beads in the prior art are sorbitan carboxylates, sorbitol or mannitol carboxylates, glycol or glycerol carboxylates, alkanolamides, alkyl phenols and dialkyl ethers (any of which emulsifiers may or may not contain a polyalkoxy chain with 1 to 20 oxyalkylene groups). Other known emulsifiers used for the preparation of water-expandable polymer beads are salts of long chain (C8 -C30) carboxylic acids, long chain (C8-30) alkyl sulphonic acid, Other known emulsifiers used for the preparation of water-expandable polymer beads are alkylarylsulphonic acid, sulphosuccinic acid. high-molecular-weight fatty amines, ammonium or other nitrogen derivatives of long chain carboxylic acids.

The term "emulsifier-free process" is herein meant a process in which the monomer composition includes no or little amount, e.g. less than 0.01 wt% (with respect to the monomers in the monomer composition), of the emulsifiers mentioned in the preceding paragraph.

In the process according to the present invention, styrene and a polar comonomer are copolymerized. The polar comonomer allows the emulsification of the water droplets in the prepolymer composition of copolymer/styrene/polar monomer, hence providing the possibility of an emulsifier-free process for the preparation of water expandable polymer beads. It was advantageously found that the presence of the polar monomers does not influence the stability of the suspension subjected to the suspension polymerization step. In comparison, addition of the emulsifier was found to result in a complete inverse emulsion. Hence, beads were no longer present.

The lack of either the polar monomer or the nanoclay leads to unsatisfactory polymer beads. The addition of nanoclay increases the water uptake, but in the cases where only styrene was used as the monomer and the nanoclay is added, the water droplets inside the WEPS beads are rather large and inhomogeneously distributed. Similarly, when only the polar monomer is used without the nanoclay, the water droplets inside the WEPS beads are large and inhomogeneously distributed. The use of the polar comonomer and the nanoclay in combination resulted in polymer beads with a high water uptake in which a homogeneous distribution of the nanoclay/water dispersion is achieved.

It was found that the addition of the nanoclay dispersion should be done after some portion of the monomers have been converted to copolymer. Without wishing to be bound by any theory, it is thought that the viscosity of the prepolymer mixture has to be sufficiently high prior to addition of the dispersion of nanoclay. Water droplet coagulation and inhomogeneous droplet distribution may occur when the nanoclay dispersion is added to a low viscous reaction mixture. When the nanoclay dispersion is added, the degree of conversion from the monomers to copolymer is preferably 20 to 55%, based on the monomers. The conversion rate can be determined by evaporating the volatile monomers from a sample of the reaction mixture of a known weight and measuring the residual weight of the non-volatile copolymer. The sample may be dried e.g. at 60 °C for at least 24 hours under vacuum for the evaporation.

The nanoclay used in the present invention is a modifier-free nanoclay. It was found that modified nanoclays resulted in a decreased suspension stability. The resulting beads were non-spherical "egg-shaped" beads, or in some cases the process results even in complete suspension failure which is comparable when using AOT. In comparison, modifier-free nanoclays were found not to decrease the suspension stability and therefore are suitable. Modifier-free nanoclays used in the present invention are not particularly limited and include modifier-free nanoclays such as sodium montmorillonite (Na⁺MMT), and calcium montmorillonite (Ca²⁺MMT), which can be synthetic or natural. Although calcium montmorillonite typically exists as aggregates formed of layered structures, the aggregates can be exfoliated in a water-based solution. It is to be appreciated that layered talc minerals may be included in addition to, or in place of, the modifier-free nanoclays, and such embodiments are considered to be within the purview of this invention. In preferred embodiments, the nanoclay is Na⁺MMT. It is commercially available from e.g. Southern Clay Products, Inc or Nanocor Company. The nanoclay from Southern Clay Products Inc is sold under the name Nanofil116. The sodium montmorillonite available from Nanocor is sold under the name Nanocor PGV. Nanocor PGV and has an aspect ratio of 150-200 and a maximum moisture uptake of 18 wt%.

The polar comonomer containing a carbon-to-carbon double bond may be selected from a wide range of monomers as long as it can be copolymerized with styrene.

The term "polar" as referred to herein is well-known to the skilled person in the art; for instance, a polar molecule is defined in the prior art as a molecule having a permanent electric dipole moment or polarity refers in the prior art to a separation of electric charge leading to a molecule or its chemical groups having an electric dipole or multipole moment, molecular polarity being typically dependent on the difference in electronegativity between atoms in a compound and the asymmetry of the compound's structure; the polar molecules interact through dipole-dipole intermolecular forces and hydrogen bonds (see e.g. http://en.wikipedia.org/wiki/Chemical_polarity and R. T. Morrison and R. N. Boyd, Organic chemistry, 5th edition, Chapter 1). In G. Solomons, Fundamentals of Organic Chemistry, 5th edition, Chapter I, page 38, the term polar bond is also described as when two atoms of different electronegativities form a covalent bond; due to this difference in electronegativity, the electrons are not shared equally between them. The atom with the greater electronegativity draws the electron pair closer to it, and a polar covalent bond results. A polar comonomer as referred to in the present invention can be defined thus as a molecule comprising at least one carbon to carbon double bond together with at least two atoms of different electronegativities forming a covalent bond with each other.

Examples of the polar comonomer containing a carbon-to-carbon double bond may be represented by the comonomer of formula (1), 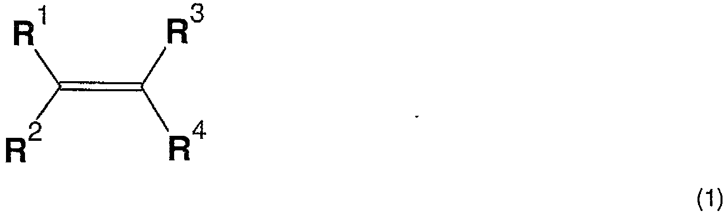
wherein R¹ stands for H or for an alkyl having 1 to 3 C-atoms,
wherein R² stands for H or for a carboxylic acid
wherein R³ stands for H or for an optionally substituted alkyl having 1 to 6 C-atoms
wherein R⁴ stands for a polar group selected from the group consisting of a carboxylic acid group (COOH), a carboxylic acid amide group connected via the C-atom (C(O)NH₂), a carboxylic acid amide group connected via the N-atom (NHC(O)H), an N-pyrrolidinone group (structure), a pyridine group(structure), a carboxylic acid alkyl ester group having 2 to 4 C-atoms substituted with a polar group R⁷, wherein R⁷ stands for a hydroxyl group (OH), an amine group (NH₂) or for a carboxylic acid group (COOH) and an ether group having 1 to 3 C-atoms substituted with a polar group R⁸, wherein R⁸ stands for a hydroxyl group (OH), a primary, secondary or a tertiary amine group (NR⁵R⁶, wherein R⁵ and R⁶) or for a carboxylic acid group (COOH) and
wherein R² and R⁴ may form a ring together with the C-atoms to which they are bound and wherein R³ and R⁴ may form a ring together with the C-atoms to which they are bound
   R¹ preferably stands for H or methyl.
   R² preferably stands for H.
   R³ may stand for an optionally substituted alkyl having 1 to 6 C-atoms, preferably for H, methyl, ethyl or i-propyl. Substituents include polar groups, such as for example a carboxylic acid group (COOH), an amine group (NH₂), an amide group (C(O)NH₂) and a hydroxyl group (OH).
   R⁴ may stand for a carboxylic acid alkyl ester having 2 to 4 C-atoms substituted with a polar group R⁷, wherein R⁷ stands for a hydroxyl group (OH), an amine group (NH₂), a carboxylic acid group (COOH), for example for a carboxylic acid methyl ester or for a carboxylic acid ethyl ester.
   R² and R⁴ may form a ring together with the C-atoms to which they are bound; for example a ring containing a heteroatom, for example N or O.
   R³ and R⁴ may form a ring together with the C-atoms to which they are bound, for example a ring containing a heteroatom, for example N or O.

Examples of the polar comonomer of formula (1) include but are not limited to acrylic acid (R¹, R² and R³ stand for H and R⁴ stands for a carboxylic acid group), methacrylic acid (R¹ and R² stand for H, R³ stands for methyl and R⁴ stands for a carboxylic acid group), propyl acrylic acid (R¹ and R² stand for H, R³ stands for i-propyl and R⁴ stands for a carboxylic acid group), maleic acid or citraconic acid (R¹ and R³ stand for a carboxylic acid group and R² and R⁴ stand for H), itaconic acid (R¹ and R² stand for H, R³ stands for methyl substituted with a carboxylic acid group and R⁴ stands for a carboxylic acid group), measconic acid (R¹ stands for methyl, R² stands for a carboxylic acid group, R³ stands for H and R⁴ stands for a carboxylic acid group), acrylamide (R¹, R² and R³ stand for H and R⁴ stands for an amide group connected via the C-atom), methacrylic amide (R¹ and R² stand for H, R³ stands for methyl and R⁴ stands for an amide group connected via the C-atom), vinylpyrollidinone (R¹, R² and R³ stand for H and R⁴ stands for pyrollidinone), N-vinylformamide (R¹, R² and R³ stand for H and R⁴ stands for an amide group connected via the N atom), vinylpyridine (R¹, R² and R³ stand for H and R⁴ stands for pyridine), 2-hydroxy ethylacrylate (R¹, R² and R³ stand for H and R⁴ stands for the ethylester of carboxylic acid substituted with a hydroxyl group), 2-hydroxyethylmethacrylate (R¹ and R² stand for H and R³ stands for methyl and R⁴ stands for the ethylester of carboxylic acid substituted with a hydroxyl group), 2-hydroxyethylvinylether (R¹, R² and R³ stand for H and R⁴ stands for an ethylether substituted with a hydroxyl group), 2-aminoethylacrylate (R¹, R² and R³ stand for H and R⁴ stands for the ethylester of carboxylic acid substituted with an amine group), 2-aminoethylvinylether (R¹, R² and R³ stand for H and R⁴ stands for ethylether substituted with an amine group), citraconic acid anhydride (R¹ stands for methyl, R² and R⁴ form a ring together with the carbon atoms to which they are bound and the ring contains an O-atom and R³ stands for H), itaconic acid anhydride and maleic acid anhydride (R¹ and R³ stand for H and R² and R⁴ form a ring together with the carbon atoms to which they are bound and the ring contains an O-atom).

Particularly preferred are when the polar comonomer is selected from the group consisting of acrylic acid, methacrylic acid and 2-hydroxyethyl methacrylate (HEMA).

The amount of the polar comonomer with respect to styrene influences the water droplet distribution, as well as the degree of the emulsification of water in the prepolymer composition.

In the cases where the polar comonomer is 2-hydroxyethyl methacrylate, the weight ratio of styrene and the polar comonomer in the monomer composition is preferably between 99:1 to 70:30.

The combination of styrene, HEMA and nanoclay showed a particularly large increase in the water entrapment compared to the combination of styrene and HEMA without the use of nanoclay. The pores containing water droplets present in the beads are small. The weight ratio of styrene and HEMA in the monomer composition is preferably between 95:5 to 85:15. This range was found to result in a highly uniform distribution of water droplets in the WEPS beads, which may lead to large expansion ratios. A further advantage of such PSPHEMA copolymers comprising up to 15 wt% of HEMA is that they have a single glass transition temperature Tg. This improves homogeneous expansion upon heating.

In the cases where the polar comonomer is methacrylic acid, the weight ratio of styrene and methacrylic acid in the monomer composition is preferably between 99:1 to 90:10, preferably 98:2 to 94:6. The pores containing water in the PSPMAA beads showed a homogeneous distribution in the beads, i.e. the pores were present evenly in the center of the beads and closer to the surface.

In the cases where the polar comonomer is acrylic acid, the weight ratio of styrene and acrylic acid in the monomer composition is preferably between 99:1 to 90:10, preferably 98:2 to 94:6

The amount of the nanoclay is preferably 0.1-10 wt% with respect to the total weight of the monomers in the monomer composition, more preferably 0.1-1.5 wt%, more preferably 0.1-1.0 wt%, more preferably 0.3-1.0 wt%. Even more preferably, the amount of the nanoclay is 0.5-1.0 wt%. This range of nanoclay results in a particularly improved water uptake. The amount of the nanoclay in the aqueous dispersion used in step c) is preferably 1-10 wt%. This range allows making a homogeneous dispersion of nanoclay.

### Step a)

An emulsifier-free monomer composition used in the process of the present invention is provided in step a). The monomer composition comprises styrene and a polar comonomer which results in a copolymer of styrene and the polar comonomer. The monomer composition may further comprise a polymerization initiator and a cross-linking agent. It is noted that a combination of more than one initiators or a combination of more than one cross-linking agents may also be used. The monomer composition does not contain an emulsifier, i.e. the monomer composition is an emulsifier-free composition.

Suitably, the cross-linking agent is selected from the group of compounds having at least two olefinic double bonds. Examples of such compounds include divinylbenzene (or a mixture of its isomers), α, ω-alkadienes, e.g. isoprene, the diester of acrylic acid or methacrylic acid with a diol, such as ethylene glycol,butanediol, pentanediol or hexanediol. Preferred for its compatibility with styrene is divinylbenzene (or mixture of its isomers).

In order to obtain a significant cross-linking effect, the amount of the cross-linking agent should not be too low. On the other hand, if the amount of cross-linking agent would be too high, the expandability of the eventual particles would be deteriorated. A suitable range is from 0.01 to 5% wt, preferably from 0.01 to 1.5% wt, more preferably 0.01 to 0.5 wt%, based on the amount of monomers. Most preferably from 0.01 to 0.1% wt of cross-linking agent is used.

It was surprisingly found that the cross linking agent improves the mechanical properties of the expanded beads resulting from the WEPS of the present invention. After the beads are compressed and the pressure is released, the increase of the thickness was found to be larger than the beads in which no cross linking agent was used.

The polymerization initiator can be selected from the conventional initiators for free-radical styrene polymerization. They include in particular organic peroxy compounds, such as peroxides, peroxycarbonates and peresters. Combinations of peroxy compounds can also be used. Typical examples of the suitable peroxy initiators are C6 -C20 acyl peroxides such as decanoyl peroxide, benzoyl peroxide, octanoyl peroxy, stearyl peroxide, 3,5,5-trimethyl hexanoyl peroxide, per-esters of C2 -C18 acids and C1 -C5 alkyl groups, such as t-butylperbenzoate, t-butylperacetate, t-butyl-perpivalate, t-butylperisobutyrate and t-butyl-peroxylaurate, and hydroperoxides and dihydrocarbyl (C3 -C10)peroxides, such as diisopropylbenzene hydroperoxide, di-t-butyl peroxide, dicumyl peroxide or combinations thereof. When temperatures above 100 °C are used for suspension polymerization, typically a combination of benzoyl peroxide and t-butylperbenzoate or di-t-butylperoxide is used.

Radical initiators different from peroxy compounds are not excluded. A suitable example of such a compound is α,α'-azobisisobutyronitrile. The amount of radical initiator is suitably from 0.01 to 1% wt, based on the weight of the monomers.

The monomer composition may further contain other additives in effective amounts. Such additives include dyes, fillers, flame retarding compounds, nucleating agents, antistatic compounds and lubricants.

### Step b)

The monomer composition is subjected to a prepolymerization step to obtain a mixture of styrene, the polar comonomer and their copolymer. The monomer composition may be added to a reactor, e.g. a double-walled reactor equipped with motorized stirrer, reflux cooler, temperature sensor and nitrogen inlet.

The reactor may be purged with a nitrogen flow of e.g. 0.5 L/min during the whole reaction. The stirring speed is set to an appropriate speed, e.g. at 300 rpm.

The monomer composition is heated to the reaction temperature to obtain a prepolymer composition. The reaction temperature depends e.g. on the type of the initiators. For example, when benzoyl peroxide is used as the initiator, the reaction temperature is preferably chosen to be in the range of 80 to 90 °C. More preferably, the reaction temperature is chosen to be in the range of 85 to 90 °C. In the cases where azo type initiators are used, the reaction temperature may be chosen to be lower than 80 °C, e.g. 70-80 °C. The reaction temperature is chosen to control the reaction rate to an appropriate level. When the temperature is too low, the reaction the overall reaction rate is too low. Similarly, when the temperature is too high, the overall reaction rate becomes too high. Especially in the cases where the polar comonomer is acrylic acid, an increased reaction rate was observed which becomes more difficult to control.

When the temperature reaches the reaction temperature, the reaction mixture is subsequently held at the reaction temperature e.g. for 30-120 minutes. Preferably, the reaction time is 45-90 minutes, more preferably 75-90 minutes.

Particularly preferred is heating at a temperature of 85-90 °C for 75-90 minutes.

The degree of conversion of the prepolymer composition to which the nanoclay dispersion is added is preferably 20 to 55 %, based on the monomers. The degree of conversion can be determined by evaporating the volatile monomers from a sample of the reaction mixture of a known weight and measuring the residual weight of the non-volatile copolymer. Before evaporating the volatile monomers from the sample, a few mg of hydroquinone is added to quench the reaction. The sample may be dried e.g. at 60 °C for at least 24 hours under vacuum for the evaporation.

### Step c)

The nanoclay is mixed with the prepolymer composition as an aqueous dispersion. The aqueous dispersion of the nanoclay may be obtained by high shear mixing and ultrasonification. For example, an aqueous medium containing the nanoclay is subjected to a high shear mixing of 15000-20000 rpm for 30 minutes followed by ultrasonification of 750 W for 30 minutes. It will be appreciated that suitable rates and time depend on the type and the size of high shear mixer to a large degree. These steps may be performed at room temperature. These steps may be repeated until a stable and homogeneous dispersion of nanoclay is obtained.

By adding the aqueous dispersion of the nanoclay to the prepolymer composition, an inverse emulsion of nanoclay/water in the prepolymer composition is obtained, i.e. droplets of a mixture of nanoclay and water are dispersed in the prepolymer composition. The inverse emulsion is kept isothermally for some time, e.g. 20-40 min at or close to the reaction temperature, e.g. at 90 °C.

### Step d)

The inverse emulsion obtained by step c) is suspended in an aqueous medium. The aqueous medium may be added to the inverse emulsion while stirring. The aqueous medium contains a suspension stabilizer. Any conventional suspension stabilizer may be used, such as polyvinylalcohol, gelatine, polyethyleneglycol, hydroxyethylcellulose, carboxymethylcellulose, polyvinylpyrrolidone, polyacrylamide, but also salts of poly(meth)acrylic acid, phosphonic acid or (pyro)phosphoric acid, maleic acid, ethylene diamine tetracetic acid, and the like, as will be appreciated by the person skilled in the art. Suitable salts include the ammonium, alkali metal and alkaline earth metal salts. An advantageous example of such a salt is tricalcium phosphate. Preferably, the stabilizing agent is based on polyvinylalcohol. The amount of the stabilizing agents may suitably vary from 0.05 to 1.2, preferably from 0.15 to 0.8% wt, based on the weight of the water. The volume ratio between the aqueous medium and the prepolymer composition may vary between wide ranges, as will be appreciated by a person skilled in the art. Suitable volume ratios include 1:1 to 1:10 (prepolymer composition: aqueous suspension). The optimal ratio is determined by economic considerations.

Preferably, the aqueous medium has a temperature close to the inverse emulsion. This avoids the temperature decrease of the inverse emulsion after addition.

### Step e)

The suspension is subjected to suspension polymerization. The temperature of this polymerization step may depend on the pressure at which this polymerization step is performed. When this step is performed in at atmospheric pressure, the temperature is preferably 85-90 °C. The temperature is preferably at least as high as the prepolymerization step b). The polymerization is preferably performed for a period of 180-360 min, more preferably 200-270 min. When this step is performed at a higher pressure, the temperature may be higher. For example, at a pressure of 4 bars, the step may be performed at a temperature of up to 125-130 °C. The polymerization is preferably performed in this case for a period of up to 410 minutes.

It was advantageously found that steps a)-e) can be performed in the same reactor. This provides a simple process compared e.g. to the processes in which the prepolymerization step and the polymerization step are performed in different reactors. The reactor may be a glass reactor where one can look inside, or a pressurized reactor made of e.g. a stainless steel.

The expandable polymer beads may further be coated with a coating composition for suppressing the diffusion of water out of the beads. Examples of such coating compositions are compositions containing glycerol- or metal carboxylates. Such compounds reduce the tendency of the particles to agglomerate. Suitable carboxylates are glycerol mono-, di- and/or tristearate and zinc stearate. Examples for such additive composition are disclosed in GB-A-1,409,285. Particularly useful coating composition comprises wax, especially paraffin wax. The coating composition are deposited onto the particles via known methods e.g. via dry-coating in a ribbon blender or via a slurry or solution in a readily vaporising liquid.

The present invention also relates to water expandable polymer beads obtainable by the present invention.

The present invention also relates to water expandable polymer beads comprising a copolymer of styrene and a polar comonomer containing a carbon-to-carbon double bond and a modifier-free nanoclay. The polar comonomer may be any of the polar comonomer described above. For example, the polar comonomer may be 2-hydroxyethyl methacrylate and the weight ratio of styre and 2-hydroxyethyl methacrylate in the monomer composition may be between 99:1 to 70:30, preferably 95:5 to 85:15. The polar comonomer may be methacrylic acid and the weight ratio of styrene and methacrylic acid in the monomer composition may be between 99:1 to 90:10, preferably 98:2 to 94:6. The polar comonomer may be acrylic acid and the weight ratio of styrene and acrylic acid in the monomer composition may be between 99:1 to 90:10, preferably 98:2 to 94:6.

The water expandable polymer beads according to the present invention preferably has an average diameter of 0.1 to 3 mm, preferably from 0.4 to 3 mm . The expandable particles can be prefoamed by hot air or by using (superheated) steam, to yield expanded or pre-expanded particles. Such particles have a reduced density, e.g. from 800 to 30 kg/m³. It will be appreciated that in order to vaporize the water included in the particles to effect foaming, the temperature must be higher than used for C3 -C6 hydrocarbon foaming agents which have a lower boiling point than water. Foaming can also be effected by heating in oil or by using microwaves.

Therefore, the present invention also relates to expanded polymer beads obtainable by expanding the water expandable polymer beads according to the present invention.

It is noted that the term 'comprising' does not exclude the presence of other elements. However, it is also to be understood that a description on a product comprising certain components also discloses a product consisting of these components. By way of example, when an emulsifier-free monomer composition comprising styrene, a polar monomer and a nanoclay is referred, it is understood that both a composition consisting of styrene, a polar monomer and a nanoclay and a composition consisting of styrene, a polar monomer, a nanoclay and optional components such as a polymerization initiator and a cross-linking agent (but not comprising an emulsifier) are referred.

The invention will be further illustrated by means of the following examples.
Fig. 1(a) is a graph of a DSC heating run of the PSPHEMA prepared according to Ex. 4 of the present invention;
Fig. 1 (b) is a graph of a DSC heating run of an example of the PSPMAA prepared according to Ex. 6 of the present invention;
Fig.2(a) shows a SEM image of an example of the expandable PS bead according to Comp. Ex. C;
Fig.2(b) shows a SEM image of an example of the expandable PSPMAA bead prepared according to Ex. 6 of the present invention;
Fig.2(c) shows a SEM image of an example of the expandable PSPHEMA bead prepared according to the present invention;
Fig.2(d) shows a SEM image of a further example of the expandable PSPHEMA bead prepared according to Ex. 4 of the present invention;
Fig. 2(e) shows a SEM image of an example of an expandable PSPHEMA bead prepared without the use of nanoclay;
Fig. 2(f) shows a SEM image of an example of an expandable PSPMMA bead prepared without the use of nanoclay;
Fig. 3(a) shows a SEM image of an example of the expanded PSPMAA beads prepared according to Ex. 6 of the present invention;
Fig. 3(b) shows a SEM image of an example of the expanded PSPHEMA beads prepared according to the present invention; and
Fig. 3(c) shows a SEM image of an example of the expanded PSPHEMA beads prepared according to Ex. 4 of the present invention.

### Experiments

The monomers styrene (Sty), methacrylic acid (MAA) and 2-hydroxyethyl methacrylate (HEMA) were obtained from Aldrich and used as received. The suspension stabilizer Mowiol 40-88 (average Mw = 127 kg/mol) was provided by Aldrich. The initiator benzoyl peroxide contained 25 wt% water and was also supplied by Aldrich. Nanoclay was Nanocor PGV from Nanocor. Nanocor PGV has an aspect ratio of 150-200 and a maximum moisture uptake of 18 wt%.

Table 1 shows an overview of the composition feeds used in the experiments.

The synthesized polymer beads (sometimes referred herein as WEPS beads) are abbreviated as PSPHEMA for copolymers prepared from Sty/HEMA mixtures and PSPMAA for copolymers prepared from Sty/MAA mixtures. The weight percentage PGV is included in the abbreviation. For example, a PSPHEMA95/05_0.42%PGV copolymer is prepared from a monomer feed consisting of 95 wt% Sty and 5 wt% HEMA. A dispersion of 0.42 wt% (with respect to the total amount of the monomers) of PGV (2.5 g) in 50 ml water is added to the prepolymer mixture during the reaction.

The amount of PGV nanoclay varied between 0.375-0.63 wt% based on the total monomer weight. For the prepolymerization step, monomers Sty and HEMA were mixed using weight percentages: 95-5 and 90-10 wt%, respectively. Monomers Sty and MAA were mixed using weight percentages: 97.5-2.5 and 95-5 wt%, respectively. The amount of cross-linking agent divinylbenzene (DVB) varied between 0.05-0.08 wt% with respect to the total amount of the monomers.

**Table 1.1. Overview of the examples according to the present invention**

| **Ex** | **Abbreviation** | **Composition feed prepolymerization** | | | | **Addition of nanoclay tR (min)** |
|---|---|---|---|---|---|---|
| | | **Sty [wt%]** | **HEMA or MAA [wt%]** | **PGV nanoclay [wt%]¹** | **DVB [wt%]¹** | |
| 1 | PSPHEMA95/05_0.42%PGV | 95 | 5 | 0.42 | 0.08 | 90 |
| 2 | PSPHEMA95/05_0.42%PGV_no DVB | 95 | 5 | 0.42 | 0 | 90 |
| 3 | PSPHEMA95/05_0.6%PGV | 95 | 5 | 0.63 | 0.08 | 90 |
| 4 | PSPHEMA90/10_0.42%PGV | 90 | 10 | 0.42 | 0.08 | 90 |
| 5 | PSPMAA95/05_0.375%PGV | 95 | 5 | 0.375 | 0.05 | 90 |
| 6 | PSPMAA97.5/2.5_0.42%PGV | 97.5 | 2.5 | 0.42 | 0.08 | 90 |
| 7 | PSPMAA97.5/2.5_0.5%PGV | 97.5 | 2.5 | 0.50 | 0.05 | 90 |

| | | | | | | |
|---|---|---|---|---|---|---|
| 1: with respect to the total amount of monomers in the monomer composition | | | | | | |

**Table 1.2. Overview of comparative experiments**

| **Ex** | **Abbreviation** | **Composition feed prepolymerization** | | | | **Addition of nanoclay tR (min)** |
|---|---|---|---|---|---|---|
| | | **Sty [wt%]** | **HEMA [wt%]** | **PGV nanoclay [wt%]¹** | **DVB [wt%]¹** | |
| A | PS100_0.42%PGV_AOT | 100 | 0 | 0.42 | 0 | 90 |
| B | PS100_0.375%PGV_AOT | 100 | 0 | 0.375 | 0 | 90 |
| C | PS100_0.42%PGV-1 | 100 | 0 | 0.42 | 0.08 | 90 |
| D | PS100_0.42%PGV-2 | 100 | 0 | 0.42 | 0.08 | 90 |
| E | PSPHEMA90/10_0.375%PGV_tR= 70_no DVB | 90 | 10 | 0.375 | 0 | 70 |
| F | PSPHEMA90/10_0.42%PGV_tR=0 | 90 | 10 | 0.42 | 0.08 | 0 |

| | | | | | | |
|---|---|---|---|---|---|---|
| 1: with respect to the total amount of monomers in the monomer composition | | | | | | |

### General recipe for WEPS beads containing PGV nanoclay

A general recipe for the WEPS beads containing PGV nanoclay is summarized in Table 2. For the PSPHEMA95/05_0.42%PGV batch (Ex.1), the calculated quantities are listed in the third column of Table 2. The letter 'x' denotes the weight percentage of Sty monomer used in the monomer feed. Table 3 shows the different synthesis steps that were used to prepare WEPS beads containing PGV nanoclay. Table 4 summarizes the procedure that was used to disperse PGV nanoclay in water.

**Table 2. Recipe for the synthesis of WEPS beads containing PGV nanoclay**

| Reactant | General quantities | Specific quantity Example: |
|---|---|---|
| | | PSPHEMA95/05_0.42%PG V(Ex 1) |
| | | x = 95 wt% (600 g total monomer) |
| **1)** Styrene (Sty) | x wt% | 570 g |
| **2)** 2-hydroxyethyl methacrylate (HEMA) | (100-x)wt% | 30 g |
| **3)** Initiator: Dibenzoylperoxide (DBPO) | 0.45 wt% (of total monomer weight) | 2.7 g (0.45 wt%) |
| **4)** Cross-linking agent: divinylbenzene (DVB) | 0.05-0.08 wt% (of Sty monomer weight) | 0.48 g (0.08 wt%) |
| **5)** Montmorillonite nanoclay (Nanocor PGV nanoclay)¹ | 0.375-0.63 wt% (of total monomer weight) | 2.50 g (0.42 wt%) |
| **6)** Water (inverse emulsion) | 5-10 wt% (of total monomer weight) | 50.0 g (8.3 wt%) |
| **7)** Water (suspension) | 2 times total weight of monomer | 1200 g |
| **8)** Suspension stabilizer Poly(vinyl alcohol): Mowiol 40-88 | 0.4 wt% (of total weight of suspension water) | 4.8 g (0.4 wt%) |

| | | |
|---|---|---|
| 1) PGV nanoclay was homogenized in water using a combination of high-shear mixing (IKA Ultra-Turrax T8) and ultrasonification (Sonics Vibra Cell) (see procedure in Table 4). | | |

**Table 3. Synthesis steps used in the preparation of WEPS beads containing PGV nanoclay**

| **Step** | **Temperature** | **Stirring speed [rpm]¹** | **Time [min]** |
|---|---|---|---|
| **A:** Disperse 5 in 6 | room temperature 80-90 °C | (see Table 4) | 100-120 min for dispersing PGV nanoclay in water 45-60 min for dissolving Mowiol 40-88 |
| **B:** Dissolve 8 in 7 | | | |
| **C:** Add 1+2+3+4 to reactor | 20 °C | 250 | - |
| **D:** Heat reaction mixture | to 88-89 °C | 250-300 | 20-30 |
| **E:** Isothermal period | 88-89 °C | 250-300 | 70-90 (tR = 0)² |
| **F:** Add (5+6) | 88-89 °C (slight drop in temp.) | 450-600 | < 1 (tR = 70-90) |
| **G:** Isothermal period | 88-89 °C | 450-600 | 20-40 (tR = 90-110) |
| **H:** Add (7+8) to reactor | 88-89 °C (slight drop in temp.) | 500-550 | < 5 |
| **I:** Heat reaction mixture | to 90 °C | 450-500 | 15-20 |
| **J:** Isothermal period | 90 °C | 450-500 | 225-250 (tR = 360) |
| **K:** Cooling down | 50 °C | 350-400 | 20-30 |

| | | | |
|---|---|---|---|
| 1) Stirring was done with a stirrer consisting of a bar with two 4-blade propellers with a pitch of 30°. 2) tR is the cumulative reaction time which starts at step E (tR = 0). Total reaction time (step E-J) was always 360 min. | | | |

**Table 4. General procedure for dispersing PGV nanoclay in water**

| **Step** | **Time [min]** | **Settings** |
|---|---|---|
| 1) High shear mixing | 30 | 15000-20000 rpm |
| 2) Ultrasonification | 30 | 750 W |
| 3) High shear mixing | 20 | 15000-20000 rpm |
| 4) Ultrasonification | 30 | 750 W |
| 5) High shear mixing | 10 | 15000-20000 rpm |

### Example 1 (PSPHEMA95/05_0.42%PGV)

PSPHEMA95/05_0.42%PGV was prepared in the following manner. First, 2.50 g nanoclay (Nanocor PGV from Nanocor) was dispersed in 50 g water using a high shear mixer (IKA Ultra-Turrax T8) and an ultrasonic probe (Sonics Vibra Cell) (step **A**). The dispersing procedure is summarized in Table 4.

In addition, 1200 g water containing 4.8 g (0.4 wt%) poly(vinyl alcohol) (Mowiol 40-88) was placed in a beaker and subsequently heated stepwise to 90 °C (step **B**). The monomers Sty and HEMA together with initiator DPBO and cross-linking agent DVB were added to a double-walled reactor, equipped with motorized stirrer, reflux cooler, temperature sensor and nitrogen inlet (step **C**)).

The reactor was purged with a nitrogen flow of 0.5 Umin during the whole reaction. The stirring speed was set at 300 rpm and the reaction temperature at 89 °C step **D**). The reaction time tR started when the temperature of the reaction mixture reached 89 °C (step **E**). The reaction mixture was subsequently held at 89 °C until tR = 90 min. At tR = 90 min, the stirring rate was set at 600 rpm and the PGV nanoclay (2.50 g) dispersed in water (50 g) of ambient temperature was slowly added to the viscous monomer/polymer reaction mixture (step **F**)). Due to the addition of water, the temperature of the bulk reaction mixture dropped to 81 °C but increased to 89 °C within 10 min. The stirring was continued for 20 min (step **G**). At tR = 110 min, the stirring rate was reduced to 500 rpm. Subsequently, 1200 g water (T = 88 °C) containing 4.8 g poly(vinyl alcohol) (Mowiol 40-88) was slowly added to the viscous reaction mixture under vigorous stirring (500 rpm) (step **H**). Due to the addition of suspension water, the temperature of the reaction mixture dropped to 85 °C. The reaction temperature was then set at 90 °C and the stirring speed reduced to 470 rpm (step **I**). The desired reaction temperature of 90 °C was reached after approximately 15 min. The reaction was subsequently kept at this temperature for 4 h (step **J**) (total reaction time 6 h, starting from tR = 0, see step **E**). The reaction mixture was cooled down to 50 °C (step **K**) and the beads were collected by filtering the reaction product over a polyester sieve of 80 µm. The outside of the polyester sieve was wiped off with tissue paper. The beads were subsequently take from the polyester sieve and placed into a drying oven at 50 °C without vacuum for 3.5 h to remove the water on the outside of the beads as much as possible.

### Examples 2-7

Examples 2-7 have been performed in the same manner as Example 1, except that the parameters were varied as summarized in Table 1.

### Comp. Ex. A-F

Comp. Ex. A-B were performed in the same way as was done by Lee et al.(Shen, J.; Cao, X.; Lee, J. Polymer 2006, 47, 6303-6310). For these batches, the emulsifier sodium bis(2-ethylhexyl)sulfosuccinate (AOT) was added to the reaction mixture at the beginning of the prepolymerization. However, lumping of the beads occurred after 2.5-4h reaction time during the suspension polymerization step.

Comp. Ex. C-F were performed in the same way as example 1, except that the parameters have been varied as summarized in Table 1-2. No polar comonomer was used in Ex. C-D. In example **E**, the reaction mixture was held at 89 °C until tR=70 min at which point the nanoclay dispersion was added, instead of 90 min as in the examples according to the present invention. Further, no DVB was added. In example **F**, the nanoclay dispersion was added immediately after the temperature of the reaction mixture reached 89 °C (tR= 0 min).

### Results

### Differential scanning calorimetry (DSC)

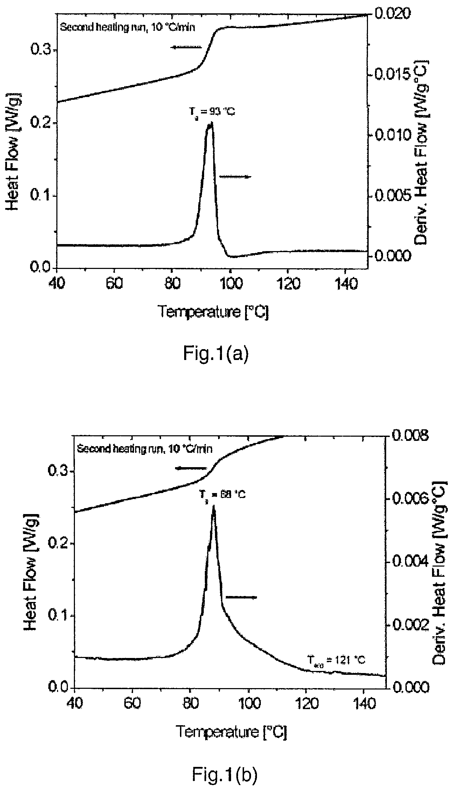

The samples were dried for 24 h in an oven under vacuum at 60 °C to remove the entrapped water inside the beads. For DSC measurements, the temperature was varied between -50 and 150 °C using heating and cooling rates of 10 °C/min and isothermal periods of 2 min at -50 and 150 °C, respectively. Only the second DSC heating run was evaluated. The second DSC heating runs of PSPHEMA90/10_0.42%PGV (Ex.4) and PSPMAA97.5/2.5 (Ex.6) are shown in Figure 1(a) and 1(b), respectively.

For PSPHEMA90/10_0.42%PGV (Ex.4), the derivative of the heat flow in Figure 1 (a) shows only a single peak with its maximum at 93 °C. A single Tg should contribute to a homogeneous foam during foaming process with superheated steam.

For PSPMAA97.5/2.5_0.42%PGV (Ex.6) batch shown in Figure 1(b), a sharp peak with its maximum at 88 °C can be observed together with a tail that has an end temperature of 121 °C.

The results are summarized in Table 5. T_{end} is defined as the temperature at which the transition ends.

**Table 5 DSC results of the synthesized WEPS batches**

| **Ex.** | **Sample name** | **DSC heating run 2** | |
|---|---|---|---|
| | | **Tg [°C]** | **T_{end} [°C]** |
| 1 | PSPHEMA95/05_0.42%PGV | 93 | |
| 2 ok | PSPHEMA95/05_0.42%PGV_noDVB | 94 | |
| 3 ok | PSPHEMA95/05_0.6%PGV | 92 | |
| 4 ok | PSPHEMA90/10_0.42%PGV | 93 | |
| 5 ok | PSPMAA95/05_0.375%PGV | 94 | 138 |
| 6 ok | PSPMAA97.5/2.5_0.42%PGV | 88 | 121 |
| 7 ok | PSPMAA97.5/2.5_0.5%PGV | 95 | 119 |
| C ok | PS100_0.42%PGV-1 | 90 | |
| E ok | PSPHEMA90/10_0.375%PGV_tR=70_ noDVB | 94 | |
| F ok | PSPHEMA90/10_0.42%PGV_tR=0 | 91 | |

A sample PSPHEMA90/10_0.6%PGV (weight ratio of styrene to HEMA = 90:10, 0.6 wt% of PGV with respect to all the monomers) was also prepared in a pressurized reactor at a pressure of 4 bars. This sample was determined by DSC to have a Tg of 103 °C. Similarly, a sample PSPHEMA90/10_0.42%PGV (weight ratio of styrene to HEMA = 90:10, 0.42 wt% of PGV with respect to all the monomers) was prepared in a pressurized reactor at a pressure of 4 bars. This sample has a Tg of 104 °C.

### Karl Fischer (KF) titration

The amount of water inside the synthesized beads was determined by Karl Fischer titration. For most batches listed in Table 1, 8.3 wt% water (based on the total amount of monomer) was added to the prepolymer mixture. If all added water is entrapped inside the beads, then 7.7 wt% water will be theoretically present with respect to the total weight of polymer, water and nanoclay.

The beads were dried in such a way that water present on the surface will be removed as much as possible, but water inside the bead should be retained. All samples were therefore dried for 3.5 h in an oven at 50 °C (without vacuum). The beads were no longer sticky when being removed from the oven. However, there is always equilibrium between water inside and on the surface of the bead so that after some storage time, the beads become sticky again. This thin film of water that is present on the surface can be considered to be similar and thus comparison can be made between the different samples.

Table 6 gives an overview of the synthesized batches and the corresponding measured water contents. After drying in the oven, the beads were sieved into 3 fractions: 400-600 µm, 600-800 µm, 800-1180 µm. For each fraction, the entrapped amount of water was determined. From Table 6, it can be seen that the amount of entrapped water is dependent on the bead size. Smaller beads have a higher surface/volume ratio so that relatively more water is evaporated during the residence time in the oven compared to large beads. As a consequence, small beads will normally contain less water after drying than large beads from the same batch. For most batches, the entrapped amount of water is smaller than the amount of water that can be theoretically present (7.7wt%).

**Table 6 Water contents for the synthesized WEPS batches containing PGV nanoclay.**

| **Ex.** | **Sample name** | **Water contents in weight percentage** | | |
|---|---|---|---|---|
| | | **400-600 µm** | **600-800 µm** | **800-1180 µm** |
| 1 ok | PSPHEMA95/05_0.42%PGV | - | - | 5.5 |
| 2 ok | PSPHEMA95/05_0.42%PGV_ no DVB | 8.9 | 8.4 | 11.1 |
| 3 ok | PSPHEMA95/05_0.6%PGV | 7.5 | 7.6 | 8.0 |
| 4 ok | PSPHEMA90/10_0.42%PGV | 4.1 | 4.1 | 6.3 |
| 5 ok | PSPMAA95/05_0.375%PGV | 4.5 | 5.7 | 6.6 |
| 6 ok | PSPMAA97.5/2.5_0.42%PGV | 8.4 | 8.5 | 8.4 |
| 7 ok | PSPMAA97.5/2.5_0.5%PGV | - | - | 6.5 |
| C ok | PS100_0.42%PGV-1 | 2.5 | 3.8 | 4.7 |
| E ok | PSPHEMA90/10_0.375%PGV _tR=70_no DVB | 3.1 | 3.3 | 3.5 |
| F ok | PSPHEMA90/10_0.42%PGV_t R=0 | 2.0 | 2.8 | 5.1 |
| G | PSPHEMA90/10 | 0.6 | 0.8 | 1.1 |

Comp. Ex. G was prepared in the same manner as Ex. 4 except for that no nanoclay was used and that the prepolymerization step was performed at a temperature of 85 °C instead of 88-89 °C.

It can be seen that the water contents in the beads according to the present invention is generally higher than in the beads according to the comparative experiments.

### Morphology before and after foaming

### Unfoamed beads

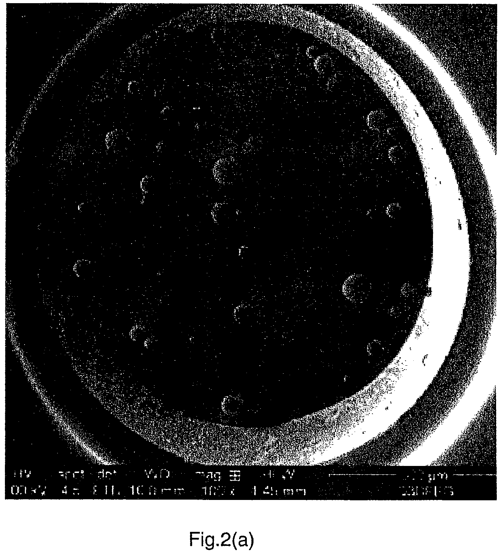

SEM was used to study the morphology of the synthesized beads. Therefore, a cross section of a bead was prepared by cutting off slices with a rotation microtome and the surface was subsequently sputtered with gold. Cross sections of unfoamed beads from different batches are shown in Figures 2(a)-(f). Figure 2(a) shows a bead from the Comp. Ex. C (PS_0.4%PGV) batch. Large holes can be seen all over the surface of the cross-section. These holes originate from water droplets which are entrapped inside the bead. It can be seen that the holes are not randomly distributed over the surface. This result is most likely due to an inhomogeneous distribution of the PGV nanoclay/water mixture that was added to the PS/Sty mixture during the prepolymerization step. This morphology will result in poor foamability as was verified by the compressibility tests as described below. From this result it can be concluded that additional emulsifiers such as AOT are necessary to improve the distribution of the PGV nanoclay/water mixture in the PS/Sty mixture. However, emulsifiers such as AOT destabilize the suspension stability.

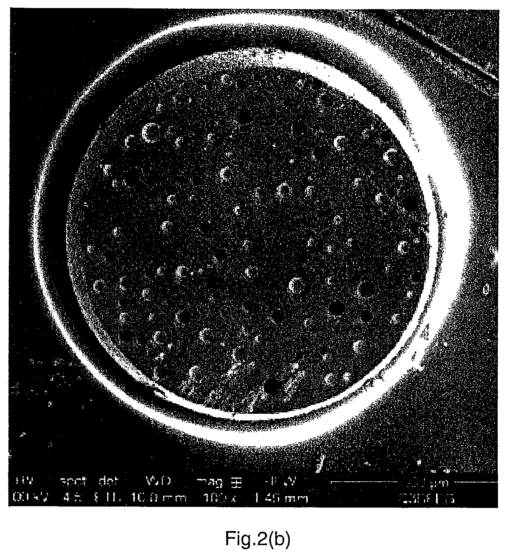

Figure 2(b) shows the cross section of a PSPMAA97.5/2.5_0.42%PGV bead (Ex.6). It can be seen that MAA in combination with PGV nanoclay results in a more random distribution of water droplets compared to the homopolymer PS_0.42%PGV (Comp. Ex.C) batch.

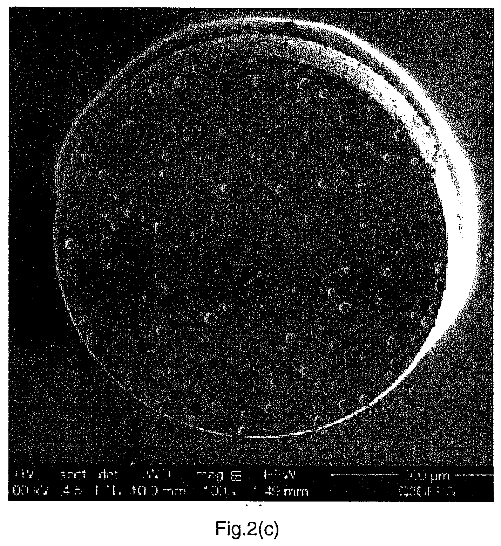

Figure 2(c) shows the cross section of a PSPHEMA95/05_0.42%PGV batch. It can be observed that the average size of the holes is smaller compared to the size of the holes in the PSPMAA97.5/2.5_0.42%PGV (Ex.6) bead (Figure 2(b)). Therefore, the copmonomer HEMA decreases the hole size even more than the comonomer MAA. However, more holes are present close to the edge of the bead than in the center which may negatively influence homogeneous foaming of these beads.

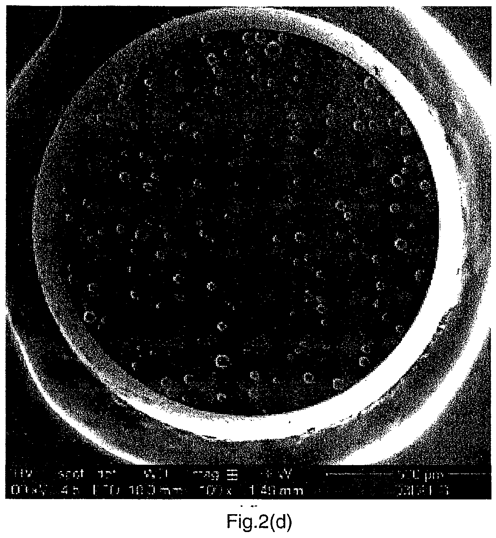

Figure 2(d) shows the cross section of a PSPHEMA90/10_0.42%PGV (Ex.4) batch. Again, small holes are present. Compared to Figure 2(c), the increased HEMA fraction results in an even more homogeneous distribution of holes over the surface of the cross section.

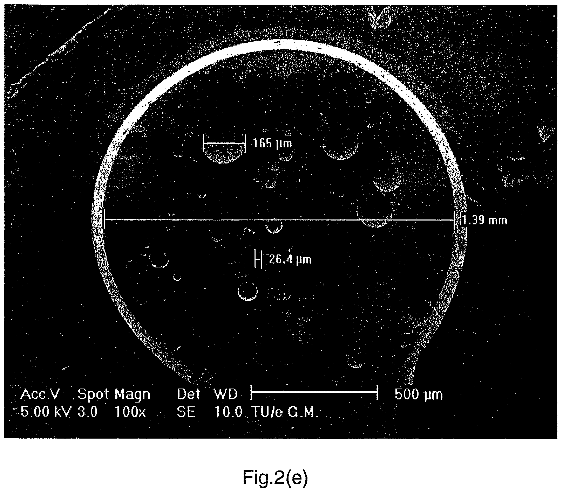

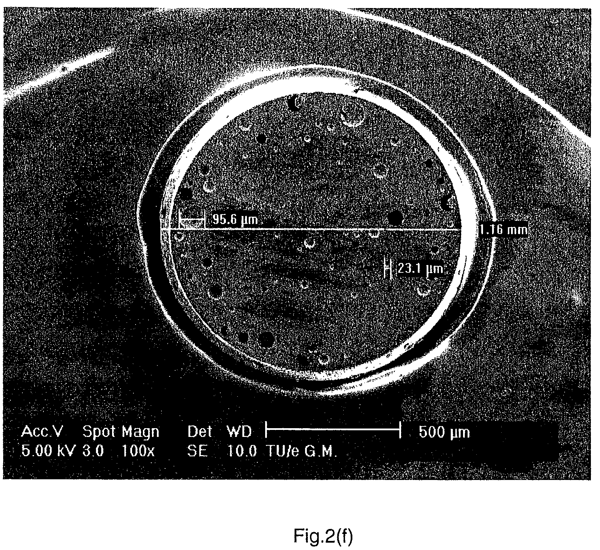

Figure 2(e) shows the cross section of a WEPS bead prepared without the use of nanoclay. The monomers used for making the bead was styrene and MAA with a weight ratio of 95:5 (PSPAA95/05). It can be seen that the water droplets inside the WEPS beads are large and inhomogeneously distributed. Figure 2(f) shows the cross section of a WEPS bead prepared without the use of nanoclay. The monomers used for making the bead was styrene and HEMA with a weight ratio of 85:15 (PSPHEMA85/15). It can be seen that the number of holes on the surface is limited. Although the holes are more randomly distributed than for the PSPAA95/05 sample of Figure 2(d), some holes are rather large and may therefore not result in homogeneous foam after expansion.

### Foaming using superheated steam

Superheated steam was used for the expandability tests of the synthesized WEPS batches. The foaming temperature used for foaming of the WEPS beads was approximately 120-130 °C.

### Compression tests

The compressibility of expanded WEPS beads was examined by compressing the beads between finger and thumb. The thickness of the expanded beads (Lo) was measured before and after compression (Lcompressed).

**Table 7. Results from compressibility tests using "finger-thumb" method.**

| Ex | Sample name | Diameter size | Lₒ (mm) | Lcompressed | Compres sion (%) |
|---|---|---|---|---|---|
| 1o k | PSPHEMA95/05_0.42%PGV-2 | 1.18 mm < f < 1.7 mm | 3.0 | 2.0 | 33 |
| 2o k | PSPHEMA95/05_0.42%PGV_ no DVB | 1.18 mm < f < 1.7 mm | 2.8 | 1.9 | 33 |
| 3o k | PSPHEMA95/05_0.6%PGV | 1.18 mm < f < 1.7 mm | 3.3 | 2.1 | 38 |
| 4o k | PSPHEMA90/10_0.42%PGV | 1.18 mm < f < 1.7 mm | 3.5 | 2.3 | 36 |
| 6o k | PSPMAA97.5/2.5_0.42%PGV | 1.18 mm < f < 1.7 mm | 3.2 | 2.1 | 34 |
| D ok | PS100_0.42%PGV-2 | 800 µm < f < 1.18 mm | 2.4 | 2.1 | 13 |
| Eo k | PSPHEMA90/10_0.375%PGV _tR=70_no DVB | 1.18 mm < f < 1.7 mm | 2.5 | 2.2 | 12 |
| Fo k | PSPHEMA90/10_0.42%PGV_t R=0 | 1.18 mm < f < 1.7 mm | 2.0 | 2.0 | 0 |
| ok | Normal EPS | 800 µm < f < 1.18 mm | 2.9 | 1.4 | 52 |

The compressibility of a conventional expanded polystyrene which is not water expanded (normal EPS) is included in the table for comparison.

For PS100_0.42%PGV-2 (Ex. D) and normal EPS, beads with a diameter between 800 µm and 1.18 mm were used for the compressibility tests by the "finger-thumb" method because no larger beads with 1.18 mm < f < 1.7 mm were available.

It can be seen from Table 7 that the beads prepared according to the present invention show a large compression. The results in Table 7 further show that the beads prepared without the use of the polar comonomer (Ex. D) is difficult to compress, despite the presence of 4.7 wt% water (according to KF titration measurements as described above). For the beads prepared according to the present invention, good compression was obtained both for HEMA and MAA.

The time at which the PGV nanoclay/water dispersion is added to the prepolymerization mixture greatly influences the compressibility. For Comp.Ex.F in which the PGV nanoclay/water dispersion was added at tR = 0 min (immediately after the reaction temperature was reached), the beads were found to be incompressible. The beads also had a rough surface.

Addition of a small DVB fraction was found to result in increased elastic deformation during compression. For Ex.2 in which no DVB was added, no increase in the thickness was observed after releasing pressure.

In Ex. E in which the PGV nanoclay/water dispersion was added at tR = 70 min and no DVB was added, the beads were difficult to compress, and no increase in the thickness was observed after releasing pressure.

Ex. 1-2 resulted in a smoother surface of the beads compared to Ex. 3.

### Foamed beads

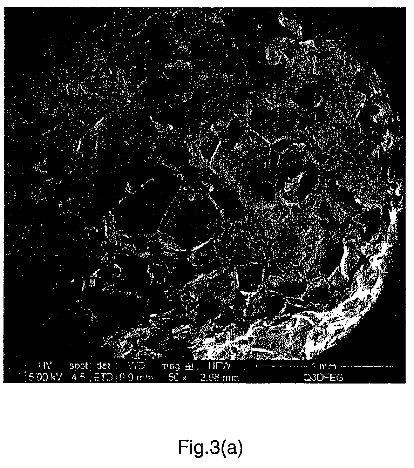

Figure 3(a) shows the cross section of an expanded WEPS bead of Ex. 6 in which MAA was used as the comonomer. The beads have been successfully expanded. However, large cells are visible in the center of the bead, whereas smaller cells can be observed closer to the edge.

DSC measurements already showed that these PSPMAA copolymers mainly consist of PS homopolymer and a small fraction of copolymer with low and high Sty/MAA ratios in the copolymer chains. This distribution in Tg values may result in a less homogeneous foaming process and consequently, a less uniform foam consisting of small and large cells was obtained.

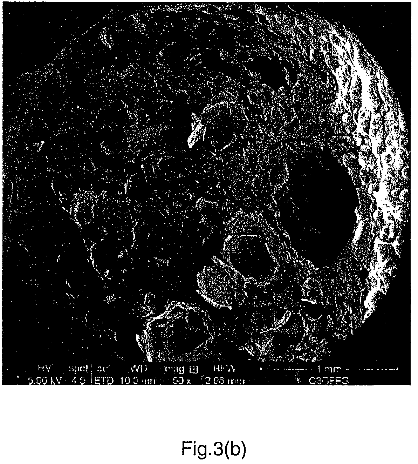

Figure 3(b) shows the cross section of an expanded WEPS bead in which 5wt% of HEMA was used as the comonomer. The beads have been successfully expanded. Some large cells are visible, but the largest fraction of cells is collapsed.

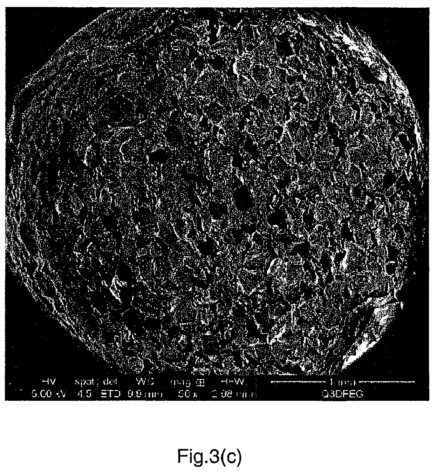

Figure 3(c) shows the cross sectional area of a WEPS bead of Ex. 4 in which 10 wt% of HEMA was used as the comonomer. The beads have been successfully expanded. Small cells are present all over the surface of the cross section. Consequently, the original morphology as shown in Figure 2(d) shows that the criterion to obtain foams with a uniform cell structure is to have WEPS beads with a homogeneous distribution of small water droplets throughout the bead.

## Claims

1. A process for the emulsifier-free preparation of water expandable polymer beads, which process comprises the steps of:
a) providing an emulsifier-free monomer composition comprising styrene and a polar comonomer containing a carbon-to-carbon double bond,
b) prepolymerizing the monomer composition to obtain a prepolymer composition comprising styrene, the polar comonomer and their copolymer,
c) adding an aqueous dispersion of a modifier-free nanoclay to the prepolymer composition to obtain an inverse emulsion,
d) suspending the inverse emulsion obtained by step c) in an aqueous medium to yield an aqueous suspension of suspended droplets and
e) polymerizing the monomers in the droplets of the suspension obtained by step d).

2. The process according to claim 1, wherein the polar comonomer is represented by the comonomer of formula (1) 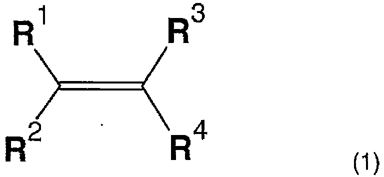
wherein R¹ stands for H or for an alkyl having 1 to 3 C-atoms,
wherein R² stands for H or for a carboxylic acid
wherein R³ stands for H or for an optionally substituted alkyl having 1 to 6 C-atoms wherein R⁴ stands for a polar group selected from the group consisting of a carboxylic acid group (COOH), a carboxylic acid amide group connected via the C-atom (C(O)NH₂), a carboxylic acid amide group connected via the N-atom (NHC(O)H), an N-pyrrolidinone group (structure), a pyridine group(structure), a carboxylic acid alkyl ester group having 2 to 4 C-atoms substituted with a polar group R⁷, wherein R⁷ stands for a hydroxyl group (OH), an amine group (NH₂) or for a carboxylic acid group (COOH) and an ether group having 1 to 3 C-atoms substituted with a polar group R⁸, wherein R⁸ stands for a hydroxyl group (OH), a primary, secondary or a tertiary amine group (NR⁵R⁶, wherein R⁵ and R⁶) or for a carboxylic acid group (COOH) and
wherein R² and R⁴ may form a ring together with the C-atoms to which they are bound and wherein R³ and R⁴ may form a ring together with the C-atoms to which they are bound.

3. The process according to claim 2, wherein the polar comonomer is selected from the group consisting of: acrylic acid (R¹, R² and R³ stand for H and R⁴ stands for a carboxylic acid group), methacrylic acid (R¹ and R² stand for H, R³ stands for methyl and R⁴ stands for a carboxylic acid group), propyl acrylic acid (R¹ and R² stand for H, R³ stands for i-propyl and R⁴ stands for a carboxylic acid group), maleic acid or citraconic acid (R¹ and R³ stand for a carboxylic acid group and R² and R⁴ stand for H), itaconic acid (R¹ and R² stand for H, R³ stands for methyl substituted with a carboxylic acid group and R⁴ stands for a carboxylic acid group), measconic acid (R¹ stands for methyl, R² stands for a carboxylic acid group, R³ stands for H and R⁴ stands for a carboxylic acid group), acrylamide (R¹, R² and R³ stand for H and R⁴ stands for an amide group connected via the C-atom), methacrylic amide (R¹ and R² stand for H, R³ stands for methyl and R⁴ stands for an amide group connected via the C-atom), vinylpyrollidinone (R¹, R² and R³ stand for H and R⁴ stands for pyrollidinone), N-vinylformamide (R¹, R² and R³ stand for H and R⁴ stands for an amide group connected via the N atom), vinylpyridine (R¹, R² and R³ stand for H and R⁴ stands for pyridine), 2-hydroxy ethylacrylate (R¹, R² and R³ stand for H and R⁴ stands for the ethylester of carboxylic acid substituted with a hydroxyl group), 2-hydroxyethylmethacrylate (R¹ and R² stand for H and R³ stands for methyl and R⁴ stands for the ethylester of carboxylic acid substituted with a hydroxyl group), 2-hydroxyethylvinylether (R¹, R² and R³ stand for H and R⁴ stands for an ethylether substituted with a hydroxyl group), 2-aminoethylacrylate (R¹, R² and R³ stand for H and R⁴ stands for the ethylester of carboxylic acid substituted with an amine group), 2-aminoethylvinylether (R¹, R² and R³ stand for H and R⁴ stands for ethylether substituted with an amine group), citraconic acid anhydride (R¹ stands for methyl, R² and R⁴ form a ring together with the carbon atoms to which they are bound and the ring contains an O-atom and R³ stands for H), itaconic acid anhydride and maleic acid anhydride (R¹ and R³ stand for H and R² and R⁴ form a ring together with the carbon atoms to which they are bound and the ring contains an O-atom),

4. The process according to claim 1, wherein the polar comonomer is 2-hydroxyethyl methacrylate and the weight ratio of styrene and 2-hydroxyethyl methacrylate in the monomer composition is between 99:1 to 70:30, preferably 95:5 to 85:15.

5. The process according to claim 1, wherein the polar comonomer is methacrylic acid and the weight ratio of styrene and methacrylic acid in the monomer composition is between 99:1 to 90:10, preferably 98:2 to 94:6.

6. The process according to claim 1, wherein the polar comonomer is acrylic acid and the weight ratio of styrene and acrylic acid in the monomer composition is between 99:1 to 90:10, preferably 98:2 to 94:6.

7. The process according to any one of the previous claims, wherein the modifier-free nanoclay is an unmodified sodium montmorillonite nanoclay and the amount of the nanoclay is 0.1-10 wt%, preferably 0.1-1.5 wt%, more preferably 0.1-1.0 wt%, more preferably 0.3-1.0 wt%, even more preferably 0.5-1.0 wt% of the total monomer weight in the monomer composition.

8. The process according to any one of the previous claims, wherein the monomer composition further comprises a cross-linking agent preferably selected from the group consisting of divinylbenzene, α, ω)-alkadienes, e.g. isoprene, the diester of acrylic acid or methacrylic acid with a diol, such as butanediol, pentanediol or hexanediol.

9. The process according to any one of the previous claims, wherein step b) involves heating the monomer composition at a temperature of 80-90 °C for a period of 30-120 minutes, preferably at a temperature of 85-90 °C for 75-90 minutes.

10. The process according to any one of the previous claims, wherein the prepolymer composition obtained by step b) has a degree of conversion from the monomers to copolymer of 20 to 55%, based on the monomers.

11. The process according to any one of the previous claims, wherein step e) involves heating the suspension obtained by step d) at a temperature of 85-90 °C for a period of 180-360 minutes, preferably 225-250 minutes, in atmospheric pressure.

12. The process according to any one of the previous claims, wherein steps a)-e) are performed in the same reactor.

13. The water expandable polymer beads obtainable by the process according to claims 1-10.

14. Water expandable polymer beads comprising a copolymer of styrene and a polar comonomer containing a carbon-to-carbon double bond and modifier-free nanoclay.

15. Expanded polymer beads obtainable by expanding the water expandable polymer beads according to any one of claims 13-14.

## Patentansprüche

1. Verfahren zur emulgatorfreien Herstellung von wasserexpandierbaren Polymerperlen, bei dem man:
a) eine emulgatorfreie Monomer-Zusammensetzung, die Styrol und ein polares Comonomer mit einer Kohlenstoff-Kohlenstoff-Doppelbindung umfasst, bereitstellt,
b) die Monomer-Zusammensetzung prepolymerisiert, wobei man eine Prepolymer-Zusammensetzung, die Styrol, das polare Comonomer und das Copolymer davon umfasst, erhält,
c) eine wässrige Dispersion eines modifikatorfreien Nanotons zu der Prepolymer-Zusammensetzung gibt, wobei man eine inverse Emulsion erhält,
d) die durch Schritt c) erhaltene inverse Emulsion in einem wässrigen Medium suspendiert, wobei man eine wässrige Suspension von suspendierten Tröpfchen erhält, und
e) die Monomere in den Tröpfchen der durch Schritt d) erhaltenen Suspension polymerisiert.

2. Verfahren nach Anspruch 1, bei dem das polare Comonomer durch das Comonomer der Formel (1) wiedergegeben wird: 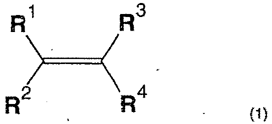
wobei R¹ für H oder für ein Alkyl mit 1 bis 3 C-Atomen steht,
wobei R² für H oder für eine Carbonsäure steht, wobei R³ für H oder für ein gegebenenfalls substituiertes Alkyl mit 1 bis 6 C-Atomen steht,
wobei R⁴ für eine polare Gruppe steht, die ausgewählt ist aus einer Carbonsäuregruppe (COOH), einer Carbonsäureamidgruppe, die über das C-Atom gebunden ist (C(O)NH₂), einer Carbonsäureamidgruppe, die über das N-Atom gebunden ist (NHC(O)H), eine N-Pyrrolidongruppe (Struktur), eine Pyridingruppe (Struktur), eine Carbonsäurealkylestergruppe mit 2 bis 4 durch eine polare Gruppe R⁷ substituierten C-Atomen, wobei R⁷ für eine Hydroxylgruppe (OH), eine Amingruppe (NH₂) oder für eine Carbonsäuregruppe (COOH) steht, und einer Ethergruppe mit 1 bis 3 durch eine polare Gruppe R⁸ substituierten C-Atomen, wobei R⁸ für eine Hydroxylgruppe (OH), eine primäre, sekundäre oder tertiäre Amingruppe (NR⁵R⁶, wobei R⁵ und R⁶) oder für eine Carbonsäuregruppe (COOH) steht, und wobei R² und R⁴ zusammen mit den C-Atomen, an die sie gebunden sind, einen Ring bilden können und wobei R³ und R⁴ zusammen mit den C-Atomen, an die sie gebunden sind, einen Ring bilden können.

3. Verfahren nach Anspruch 2, wobei das polare Comonomer aus der Gruppe bestehend aus: Acrylsäure (R¹, R² und R³ stehen für H und R⁴ steht für eine Carbonsäuregruppe), Methacrylsäure (R¹ und R² stehen für H, R³ steht für Methyl und R⁴ steht für eine Carbonsäuregruppe), Propylacrylsäure (R¹ und R² stehen für H, R³ steht für i-Propyl und R⁴ steht für eine Carbonsäuregruppe), Maleinsäure oder Citraconsäure (R¹ und R³ stehen für eine Carbonsäuregruppe und R² und R⁴ stehen für H), Itaconsäure (R¹ und R² stehen für H, R³ steht für Methyl, das durch eine Carbonsäuregruppe substituiert ist, und R⁴ steht für eine Carbonsäuregruppe), Mesaconsäure (R¹ steht für Methyl, R² steht für eine Carbonsäuregruppe, R³ steht für H und R⁴ steht für eine Carbonsäuregruppe), Acrylamid (R¹, R² und R³ stehen für H und R⁴ steht für eine Amidgruppe, die über das C-Atom gebunden ist), Methacrylamid (R¹ und R² stehen für H, R³ steht für Methyl und R⁴ steht für eine Amidgruppe, die über das C-Atom gebunden ist), Vinylpyrrolidinon (R¹, R² und R³ stehen für H und R⁴ steht für Pyrrolidinon), N-Vinylformamid (R¹, R² und R³ stehen für H und R⁴ steht für eine Amidgruppe, die über das N-Atom gebunden ist), Vinylpyridin (R¹, R² und R³ stehen für H und R⁴ steht für Pyridin), 2-Hydroxyethylacrylat (R¹, R² und R³ stehen für H und R⁴ steht für den durch eine Hydroxylgruppe substituierten Carbonsäureethylester), 2-Hydroxyethylmethacrylat (R¹ und R² stehen für H, R³ steht für Methyl und R⁴ steht für den durch eine Hydroxylgruppe substituierten Carbonsäureethylester), 2-Hydroxyethylvinylether (R¹, R² und R³ stehen für H und R⁴ steht für einen durch eine Hydroxylgruppe substituierten Ethylether), 2-Aminoethylacrylat (R¹, R² und R³ stehen für H und R⁴ steht für den durch eine Amingruppe substituierten Carbonsäureethylester), 2-Aminoethylvinylether (R¹, R² und R³ stehen für H und R⁴ steht für durch eine Amingruppe substituierten Ethylether), Citraconsäureanhydrid (R¹ steht für Methyl, R² und R⁴ bilden zusammen mit den Kohlenstoffatomen, an die sie gebunden sind, einen Ring, und der Ring enthält ein O-Atom, und R³ steht für H), Itaconsäureanhydrid und Maleinsäureanhydrid (R¹ und R³ stehen für H und und R² und R⁴ bilden zusammen mit den Kohlenstoffatomen, an die sie gebunden sind, einen Ring, und der Ring enthält ein O-Atom) ausgewählt wird.

4. Verfahren nach Anspruch 1, bei dem es sich bei dem polaren Comonomer um 2-Hydroxyethylmethacrylat handelt und das Gewichtsverhältnis von Styrol zu 2-Hydroxyethylmethacrylat in der Monomer-Zusammensetzung zwischen 99:1 bis 70:30, vorzugsweise 95:5 bis 85:15, liegt.

5. Verfahren nach Anspruch 1, bei dem es sich bei dem polaren Comonomer um Methacrylsäure handelt und das Gewichtsverhältnis von Styrol zu Methacrylsäure in der Monomer-Zusammensetzung zwischen 99:1 bis 90:10, vorzugsweise 98:2 bis 94:6, liegt.

6. Verfahren nach Anspruch 1, bei dem es sich bei dem polaren Comonomer um Acrylsäure handelt und das Gewichtsverhältnis von Styrol zu Acrylsäure in der Monomer-Zusammensetzung zwischen 99:1 bis 90:10, vorzugsweise 98:2 bis 94:6, liegt.

7. Verfahren nach einem der vorhergehenden Ansprüche, bei dem es sich bei dem modifikatorfreien Nanoton um einen unmodifizierten Natriummontmorillonit-Nanoton handelt und die Menge des Nanotons sich auf 0,1-10 Gew.-%, vorzugsweise 0,1-1,5 Gew.-%, weiter bevorzugt 0,1-1,0 Gew.-%, weiter bevorzugt 0,3-1,0 Gew.-%, noch weiter bevorzugt 0,5-1,0 Gew.-%, des Gesamtgewichts der Monomere in der Monomer-Zusammensetzung beläuft.

8. Verfahren nach einem der vorhergehenden Ansprüche, bei dem die Monomer-Zusammensetzung ferner ein Vernetzungsmittel umfasst, das vorzugsweise aus der Gruppe bestehend aus Divinylbenzol, α, ω-Alkadienen, z.B. Isopren, dem Diester von Acrylsäure und Methacrylsäure mit einem Diol, wie Butandiol, Pentandiol oder Hexandiol, ausgewählt wird.

9. Verfahren nach einem der vorhergehenden Ansprüche, bei dem man in Schritt b) die Monomer-Zusammensetzung über einen Zeitraum von 30-120 Minuten auf eine Temperatur von 80-90°C, vorzugsweise für 75-90 Minuten auf eine Temperatur von 85-90°C, erhitzt.

10. Verfahren nach einem der vorhergehenden Ansprüche, bei dem die durch Schritt b) erhaltene Prepolymer-Zusammensetzung einen Grad der Umwandlung der Monomere in Copolymer von 20-55%, bezogen auf die Monomere, aufweist.

11. Verfahren nach einem der vorhergehenden Ansprüche, bei dem man in Schritt e) die durch Schritt d) erhaltene Suspension über einen Zeitraum von 180-360 Minuten, vorzugsweise 225-250 Minuten, unter Atmosphärendruck auf eine Temperatur von 85-90°C erhitzt.

12. Verfahren nach einem der vorhergehenden Ansprüche, bei dem man die Schritte a)-e) in demselben Reaktor durchführt.

13. Wasserexpandierbare Polymerperlen, die durch das Verfahren nach den Ansprüchen 1-10 erhältlich sind.

14. Wasserexpandierbare Polymerperlen, umfassend ein Copolymer von Styrol und einem polaren Comonomer mit einer Kohlenstoff-Kohlenstoff-Doppelbindung und modifikatorfreien Nanoton.

15. Expandierte Polymerperlen, die durch Expandieren der wasserexpandierbaren Polymerperlen nach einem der Ansprüche 13-14 erhältlich sind.

## Revendications

1. Procédé de préparation sans émulsifiant de billes polymères expansibles à l'eau, lequel procédé comprend les étapes consistant à :
a) se procurer une composition de monomères sans émulsifiant comprenant du styrène et un comonomère polaire contenant une double liaison carbone-carbone,
b) prépolymériser la composition de monomères pour obtenir une composition de prépolymère comprenant du styrène, le comonomère polaire et le copolymère de ceux-ci,
c) ajouter une dispersion aqueuse d'une nanoargile sans modificateur à la composition de prépolymère pour obtenir une émulsion inverse,
d) mettre l'émulsion inverse obtenue par l'étape c) en suspension dans un milieu aqueux pour préparer une suspension aqueuse de gouttelettes en suspension et
e) polymériser les monomères dans les gouttelettes de la suspension obtenue par l'étape d).

2. Procédé selon la revendication 1, dans lequel le comonomère polaire est représenté par le comonomère de formule (1) 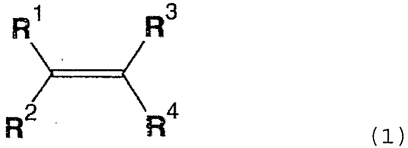
dans laquelle R¹ représente H ou un alkyle ayant 1 à 3 atomes C,
dans laquelle R² représente H ou un acide carboxylique,
dans laquelle R³ représente H ou un alkyle éventuellement substitué ayant 1 à 6 atomes C,
dans laquelle R⁴ représente un groupe polaire choisi dans le groupe constitué par un groupe acide carboxylique (COOH), un groupe amide d'acide carboxylique lié par l'atome C (C(O)NH₂), un groupe amide d'acide carboxylique lié par l'atome N (NHC(O)H), un groupe N-pyrrolidinone (structure), un groupe pyridine (structure), un groupe ester alkylique d'acide carboxylique ayant 2 à 4 atomes C substitué par un groupe polaire R⁷, où R⁷ représente un groupe hydroxyle (OH), un groupe amine (NH₂) ou un groupe acide carboxylique (COOH), et un groupe éther ayant 1 à 3 atomes C substitué par un groupe polaire R⁸, où R⁸ représente un groupe hydroxyle (OH), un groupe amine primaire, secondaire ou tertiaire (NR⁵R⁶, où R⁵ et R⁶) ou un groupe acide carboxylique (COOH) et
dans laquelle R² et R⁴ peuvent former un cycle conjointement avec les atomes C auxquels ils sont liés et dans laquelle R³ et R⁴ peuvent former un cycle conjointement avec les atomes C auxquels ils sont liés.

3. Procédé selon la revendication 2, dans lequel le comonomère polaire est choisi dans le groupe constitué par : l'acide acrylique (R¹, R² et R³ représentent H et R⁴ représente un groupe acide carboxylique), l'acide méthacrylique (R¹ et R² représentent H, R³ représente un méthyle et R⁴ représente un groupe acide carboxylique), l'acide propylacrylique (R¹ et R² représentent H, R³ représente un i-propyle et R⁴ représente un groupe acide carboxylique), l'acide maléique ou l'acide citraconique (R¹ et R³ représentent un groupe acide carboxylique et R² et R⁴ représentent H), l'acide itaconique (R¹ et R² représentent H, R³ représente un méthyle substitué par un groupe acide carboxylique et R⁴ représente un groupe acide carboxylique), l'acide mésaconique (R¹ représente un méthyle, R² représente un groupe acide carboxylique, R³ représente H et R⁴ représente un groupe acide carboxylique), l'acrylamide (R¹, R² et R³ représentent H et R⁴ représente un groupe amide lié par l'atome C), le méthacrylamide (R¹ et R² représentent H, R³ représente un méthyle et R⁴ représente un groupe amide lié par l'atome C), la vinylpyrrolidinone (R¹, R² et R³ représentent H et R⁴ représente la pyrrolidinone), le N-vinylformamide (R¹, R² et R³ représentent H et R⁴ représente un groupe amide lié par l'atome N), la vinylpyridine (R¹, R² et R³ représentent H et R⁴ représente la pyridine), l'acrylate de 2-hydroxyéthyle (R¹, R² et R³ représentent H et R⁴ représente l'ester éthylique d'acide carboxylique substitué par un groupe hydroxyle), le méthacrylate de 2-hydroxyéthyle (R¹ et R² représentent H, R³ représente un méthyle et R⁴ représente l'ester éthylique d'acide carboxylique substitué par un groupe hydroxyle), l'éther vinylique de 2-hydroxyéthyle (R¹, R² et R³ représentent H et R⁴ représente un éther éthylique substitué par un groupe hydroxyle), l'acrylate de 2-aminoéthyle (R¹, R² et R³ représentent H et R⁴ représente l'ester éthylique d'acide carboxylique substitué par un groupe amine), l'éther vinylique de 2-aminoéthyle (R¹, R² et R³ représentent H et R⁴ représente un éther éthylique substitué par un groupe amine), l'anhydride d'acide citraconique (R¹ représente un méthyle, R² et R⁴ forment un cycle conjointement avec les atomes de carbone auxquels ils sont liés et le cycle contient un atome O et R³ représente H), l'anhydride d'acide itaconique et l'anhydride d'acide maléique (R¹ et R³ représentent H et R² et R⁴ forment un cycle conjointement avec les atomes de carbone auxquels ils sont liés et le cycle contient un atome O).

4. Procédé selon la revendication 1, dans lequel le comonomère polaire est le méthacrylate de 2-hydroxyéthyle et le rapport pondéral entre le styrène et le méthacrylate de 2-hydroxyéthyle dans la composition de monomères se situe entre 99:1 et 70:30, de préférence 95:5 et 85:15.

5. Procédé selon la revendication 1, dans lequel le comonomère polaire est l'acide méthacrylique et le rapport pondéral entre le styrène et l'acide méthacrylique dans la composition de monomères se situe entre 99:1 et 90:10, de préférence 98:2 et 94:6.

6. Procédé selon la revendication 1, dans lequel le comonomère polaire est l'acide acrylique et le rapport pondéral entre le styrène et l'acide acrylique dans la composition de monomères se situe entre 99:1 et 90:10, de préférence 98:2 et 94:6.

7. Procédé selon l'une quelconque des revendications précédentes, dans lequel la nanoargile sans modificateur est une nanoargile de montmorillonite sodique non modifiée et la quantité de la nanoargile est de 0,1-10 % en poids, de préférence 0,1-1,5 % en poids, mieux 0,1-1,0 % en poids, mieux encore 0,3-1,0 % en poids, encore mieux 0,5-1,0 % en poids, rapporté au poids total des monomères dans la composition de monomères.

8. Procédé selon l'une quelconque des revendications précédentes, dans lequel la composition de monomères comprend en outre un agent de réticulation de préférence choisi dans le groupe constitué par le divinylbenzène, les α,ω-alcanediènes, par ex. l'isoprène, le diester d'acide acrylique ou d'acide méthacrylique avec un diol, tel que le butanediol, le pentanediol ou l'hexanediol.

9. Procédé selon l'une quelconque des revendications précédentes, dans lequel l'étape b) implique le chauffage de la composition de monomères à une température de 80-90 °C, pendant une période de 30-120 minutes, de préférence à une température de 85-90 °C pendant 75-90 minutes.

10. Procédé selon l'une quelconque des revendications précédentes, dans lequel la composition de prépolymère obtenue par l'étape b) a un degré de conversion des monomères en copolymère de 20 à 55 %, rapporté aux monomères.

11. Procédé selon l'une quelconque des revendications précédentes, dans lequel l'étape e) implique le chauffage de la suspension obtenue par l'étape d) à une température de 85-90 °C pendant une période de 180-360 minutes, de préférence 225-250 minutes sous pression atmosphérique.

12. Procédé selon l'une quelconque des revendications précédentes, dans lequel les étapes a)-e) sont effectuées dans le même réacteur.

13. Billes polymères expansibles à l'eau pouvant être obtenues par le procédé selon les revendications 1 à 10.

14. Billes polymères expansibles à l'eau comprenant un copolymère de styrène et d'un comonomère polaire contenant une double liaison carbone-carbone et une nanoargile sans modificateur.

15. Billes polymères expansées pouvant être obtenues en dilatant les billes polymères expansibles à l'eau selon l'une quelconque des revendications 13 et 14.
